# EUROPÄISCHE PATENTSCHRIFT

(11) **EP 0 983 912 B1**
(45) Veröffentlichungstag und Bekanntmachung des Hinweises auf die Patenterteilung: **19.11.2003**
(21) Anmeldenummer: 99115105.1
(22) Anmeldetag: 09.08.1999
(51) Int. Cl.: B60R 21/09

(54) **Pedalanordnung für ein Kraftfahrzeug**
Pedal arrangement for a motor vehicle
Agencement de pédale pour un véhicule automobile

(30) Priorität: 04.09.1998 DE 19840463
(43) Veröffentlichungstag der Anmeldung: 08.03.2000
(73) Patentinhaber: Volkswagen Aktiengesellschaft, 38436 Wolfsburg (DE)
(72) Erfinder: Austermann, Jens, Dipl.-Ing., 38175 Schwülper (DE)

(56) Entgegenhaltungen:
- WO-A-97/28029
- DE-A- 19 501 859
- DE-A- 19 515 852
- DE-A- 19 529 347

## Beschreibung

Die Erfindung bezieht sich auf eine Pedalanordnung für ein Kraftfahrzeug nach dem Oberbegriff von Patentanspruch 1.

Durch die Verwendung von Insassen-Rückhaltesystemen in Kraftfahrzeugen, wie Sicherheitsgurten und Airbags, nimmt die Gefahr von schweren Kopf- oder Brustverletzungen der Fahrzeuginsassen bei Frontalunfällen stetig ab. Dadurch treten insbesondere Verletzungen der unteren Extremitäten stärker in den Vordergrund, die durch ein unfallbedingtes Schrumpfen des verfügbaren Fußraums verursacht werden, zum Beispiel wenn die Fahrgastzelle unterhalb der Instrumententafel durch den Motorblock eingedrückt und die zwischen dem Motorraum und der Fahrgastzelle angeordnete Spritzwand entgegen der Fahrtrichtung auf die Füße und Unterschenkel eines vorne sitzenden Fahrzeuginsassen zu verlagert wird. Die Gefahr von Verletzungen der unteren Extremitäten ist auf der Fahrerseite am größten, weil dort die Pedale in den Fußraum ragen und den vorhandenen Platz weiter einschränken. Sie können darüber hinaus durch eine unfallbedingte Verlagerung ebenfalls Verletzungen verursachen. Zur Vermeidung und/oder Verringerung der Verletzungsgefahr wird eine möglichst geringe Pedalverlagerung in dieser Richtung, besser noch eine Verlagerung in der entgegengesetzten Richtung, d.h. weg von den Füßen und Unterschenkeln des Fahrers in Richtung der Spritzwand, angestrebt.

Dazu ist aus der EP 0 830 989 A1 eine Pedalanordnung bekannt, bei der die Ausknickvorrichtung einen Bowdenzug umfaßt. Dessen Innenzug ist mit einem Ende in der Mitte der Pedaldruckstange und mit einem anderen Ende an einer Motor/Getriebeeinheit befestigt ist. Der Bowdenzug ist so angeordnet, daß der Innenzug bei einer unfallbedingten Verlagerung der Motor/Getriebeeinheit entgegen der Fahrtrichtung eine nach unten gerichtete Zugkraft auf die Mitte der Pedaldruckstange ausübt, die zu einem seitlichen Ausknicken derselben und damit zu einem Verschwenken des Pedals in Richtung der Spritzwand führt.

Weiterhin wird in bekannten Personenkraftwagen ein crashoptimiertes Pedalwerk eingesetzt, bei dem ein Hebel zwischen dem Pedalwerk und einem Zentralrohr angeordnet ist, der bei einer unfallbedingten Relativbewegung zwischen Pedalwerk und Zentralrohr ein seitliches Ausknicken der Bremsdruckstange und damit ebenfalls ein Verschwenken des Pedals in Richtung der Spritzwand bewirkt.

Aus der DE 195 01 859 A1 ist es bei einer Sicherheitsanordnung für ein Kraftfahrzeug mit einem zur Vermeidung von Fußverletzungen von der Spritzwand entkoppelten Trägerelement für das Pedalwerk bereits an sich bekannt, einen Stellantrieb zum Verlagern eines Bremspedals des Kraftfahrzeugs in Richtung der Spritzwand mit einer Unfallsensoreinrichtung zu verbinden, um bei einem Unfall eine Verlagerung des Pedals mit extrem kurzer Ansprechzeit nach Unfallbeginn zu erreichen.

Eine Pedalanordnung nach dem Oberbegriff von Patentanspruch 1 ist aus der DE 195 29 347 A1 bekannt. Diese offenbart die Möglichkeit, eine Pedaldruckstange zur Lösung der Verankerung eines Bremspedals abzuknicken, und zwar quer zur Axialrichtung der Pedaldruckstange. Sie lehrt hierzu steife Verstrebungen und alternativ eine Kurbel. Die Verstrebungen drücken im Crashfall die Pedaldruckstange nach unten, wobei der Druckpunkt der Verstrebungen an der Pedaldruckstange entlang gleitet. Die Kurbel biegt die Pedaldruckstange hingegen nach oben, wobei dies weiterhin in einer Druckbewegung erfolgt. Auch hier wandert der Druckpunkt bei einer crashbedingten Verformung an der Pedaldruckstange entlang. Soweit die DE 195 29 347 A1 auf pyrotechnische Kraftspeicher und dergleichen Bezug nimmt, bleibt offen, wie diese konkret an der Pedaldruckstange angreifen. Dazu wird jedoch ausgeführt, dies könne direkt am Angriffspunkt oder indirekt über die Kurbel erfolgen. Sämtliche aus der DE 195 29 347 A1 bekannten Lösungen beziehen sich somit auf eine Druckaufbringung, bei der außerdem der Angriffspunkt über die Pedaldruckstange wandert. Diese bekannte Pedalanordnung ist im Hinblick auf die Aufbringung der Verformungskraft ungünstig. So benötigten die Verstrebungen verhältnismäßig viel Platz. Die Kurbel erfordert hingegen wiederum einen verhältnismäßig komplizierten Mechanismus.

Vor diesem Hintergrund liegt der Erfindung die Aufgabe zugrunde, bei einer Pedalanordnung mit einer Ausknickvorrichtung eine definierte Verformung der Pedaldruckstange im Crashfall zu erzeugen, um damit ein zuverlässiges Zurückziehen des Pedals aus dem Fußraum zu bewirken und dadurch die Crashsicherheit zu verbessern.

Diese Aufgabe wird durch eine Pedalanordnung nach dem Patentanspruch 1 gelöst.

Der Erfindung liegt der Gedanke zugrunde, die Bewegung des Pedals von der unfallabhängigen Relativbewegung anderer Fahrzeugteile zu entkoppeln und zum Ausknicken der Pedaldruckstange einen Stellantrieb vorzusehen, der bei einem Unfall durch einen oder mehrere Sensoren aktiviert wird und die Pedaldruckstange über ein Stellglied kraft- oder weggesteuert so weit ausknickt, daß das Pedal zumindest bis in unmittelbare Nähe der Spritzwand und vorzugsweise bis zum Anschlagen gegen die Spritzwand verschwenkt wird. Diese Anordnung hat den Vorteil, daß das Pedal bei einem schwereren Unfall unabhängig vom Auftreffwinkel oder von der Verformung des Kraftfahrzeugs von den unteren Extremitäten des Fahrers wegbewegt wird und eine Rückverlagerung infolge einer auf die Pedaldruckstange wirkenden axialen Kraft vermieden wird.

Die Pedaldruckstange weist im Bereich des Kraftangriffspunkts des Stellgliedes einen verringerten Durchmesser auf, um das Ausknicken der Pedaldruckstange zu erleichtern und einem Verbiegen derselben entgegenzuwirken.

Weitere vorteilhafte Ausgestaltungen sind in den Patentansprüchen angegeben.

Der Stellantrieb kann grundsätzlich sowohl innenraumseitig von der Spritzwand als auch motorraumseitig von der Spritzwand angeordnet sein, wobei die Spritzwand im letzteren Fall eine Durchtrittsöffnung für ein Stellglied des Stellantriebs aufweist, da sein bevorzugter Angriffspunkt in der Mitte der Pedaldruckstange und damit innenraumseitig von der Spritzwand angeordnet ist.

Da das Platzangebot für den Stellantrieb im Innenraum seitlich oder ggf. auch oberhalb der Pedaldruckstange und/oder des Pedals, d.h. vom Innenraum aus gesehen hinter oder unmittelbar unter der Instrumententafel, am größten ist, wird der Stellantrieb gemäß einer bevorzugten Ausgestaltung der Erfindung in diesem Bereich untergebracht und die Pedaldruckstange nach oben ausgeknickt, so daß eine geradlinige oder einfach umgelenkte Bewegung des Stellglieds möglich ist. Ein weiterer Vorteil eines Ausknickens der Pedaldruckstange nach oben besteht ebenso wie beim Ausknicken nach unten darin, daß die Knickebene mit der Schwenkebene des Pedals zusammenfällt, in der die Pedalverlagerung in Richtung der Spritzwand den geringsten Kraftaufwand erfordert.

Eine weitere bevorzugte Ausgestaltung der Erfindung sieht vor, daß der Stellantrieb als Straffer ausgebildet ist und ein Stellglied in Form eines Zugseils aufweist, dessen eines Ende mit dem Stellantrieb verbunden ist und dessen anderes, vorzugsweise senkrecht zur Pedaldruckstange ausgerichtetes Ende mit einem etwa in der Mitte der Pedaldruckstange angeordneten Kraftübertragungselement verbunden ist, das die Mitte der Pedaldruckstange nach oben zieht, wenn der Straffer das Zugseil strafft. Alternativ kann auch ein anderer Stellantrieb verwendet werden, beispielsweise ein pyrotechnischer Stellantrieb mit einer Zylinder-/Kolbenanordnung, deren Zylinder durch Aktivierung eines Gasgenerators mit Druckgas beaufschlagt wird und deren Kolben das Stellglied bildet, oder ein Stellantrieb mit Feder. An Stelle eines Zugseils können auch andere Stellglieder verwendet werden, beispielsweise ein Blechstreifen, der mit einer von der Pedaldruckstange durchsetzten Lochung versehen ist.

Um das Ausmaß des Ausknickens der Pedaldruckstange und damit den Schwenkweg des Pedals ohne eine Veränderung des Stellantriebs an unterschiedliche Einbaubedingungen oder unterschiedliche Fahrzeugkomponenten anzupassen, kann zwischen diesem und der Pedaldruckstange ein Hebel, ein Getriebe oder eine andere Einrichtung angeordnet sein, mit der sich die vom Stellantrieb aufgebrachte Kraft verstärken oder umgekehrt ein Bewegungsweg des Stellglieds verlängern läßt.

Im folgenden wird die Erfindung anhand von in der Zeichnung dargestellten Ausführungsbeispielen näher erläutert. Die Zeichnung zeigt in
- Figur 1a: eine teilweise geschnittene Seitenansicht einer erfindungsgemäßen Pedalanordnung,
- Figur 1b: eine Ansicht entsprechend Figur 1a, jedoch nach einem seitlichen Ausknicken einer Bremsdruckstange bei einem Unfall,
- Figur 2a: eine Ansicht entsprechend Figur 1a, jedoch mit einem anderen Stellantrieb,
- Figur 2b: eine Ansicht entsprechend Figur 2a, jedoch nach dem seitlichen Ausknicken der Bremsdruckstange,
- Figur 3a: eine Ansicht entsprechend Figur 1a, jedoch mit einem zur Kraftverstärkung zwischen dem Stellantrieb und der Bremsdruckstange angeordneten Hebel;
- Figur 3b: eine Ansicht entsprechend Figur 3a, jedoch nach dem seitlichen Ausknicken der Bremsdruckstange.

Die in der Zeichnung dargestellte Bremspedalanordnung eines Personenkraftwagens umfaßt im wesentlichen ein im Fußraum eines Fahrers des Personenkraftwagens angeordnetes Bremspedal 2, das an einem Trägerelement 4 schwenkbar gelagert und über eine Bremsdruckstange 8 mit einem Bremskraftverstärker 6 im Motorraum des Personenkraftwagens verbunden ist, sowie eine Ausknickvorrichtung 10, die einen sensorisch aktivierbaren Stellantrieb besitzt, der die Bremsdruckstange 8 bei einem Unfall quer zu ihrer Längsachse nach oben ausknickt, um dadurch das Bremspedal 2 in Richtung einer zwischen dem Motorraum und dem Fußraum angeordneten Spritzwand 16 zu bewegen, so daß die Gefahr von Verletzungen der unteren Extremitäten des Fahrers beim Unfall minimiert wird.

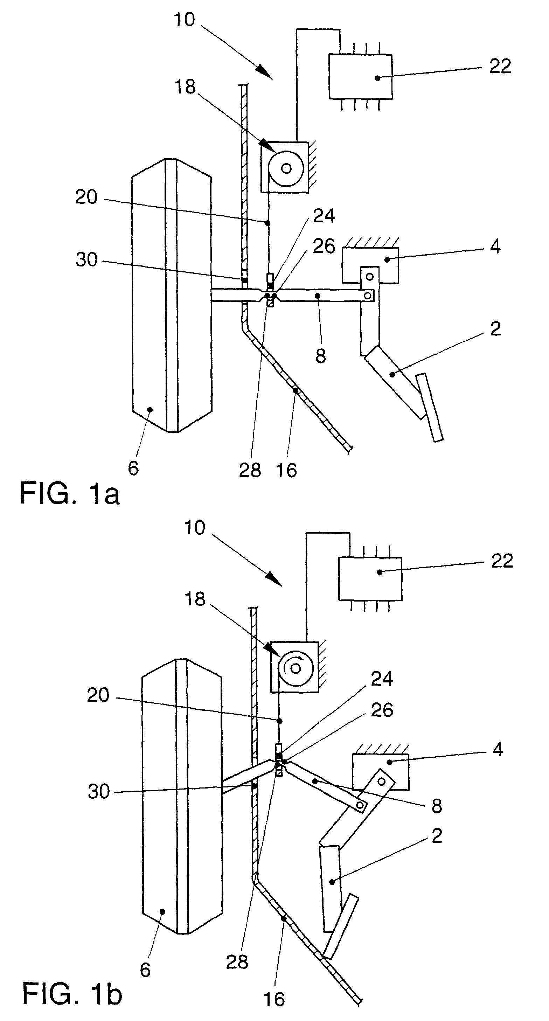

Bei der in den Figuren 1a und 1b dargestellten Bremspedalanordnung besteht der Stellantrieb aus einem modifizierten Gurtstraffer 18, auf dessen Welle an Stelle eines Kraftfahrzeugsicherheitsgurts ein Zugseil 20 aufgewickelt wird, welches in der Schwenkebene des Bremspedals 2 vom Straffer 18 aus nach unten zur Bremsdruckstange 8 führt und das Stellglied des Stellantriebs 12 bildet.

Der Straffer 18 umfaßt einen Gasgenerator mit einer Zündpille (nicht dargestellt), die elektrisch mit einer zentralen Airbag-Auslöseeinheit (ZAE) 22 verbunden ist und durch ein Signal der Auslöseeinheit 22 zusammen mit einem oder mehreren Airbags, Gurtstraffern oder anderen Insassen-Rückhaltesystemen (nicht dargestellt) des Personenkraftwagens aktiviert wird, wenn nach Überschreitung eines vorgegebenen Beschleunigungsgrenzwerts ein Beschleunigungssensor (nicht dargestellt) der Auslöseeinheit 22 anspricht. Alternativ ist jedoch auch eine mechanische Aktivierung möglich.

Das vom Straffer 18 zur Bremdruckstange 8 führende Zugseil 20 ist an seinem freien unteren Ende mit einer Zugöse 24 versehen, durch deren Auge 26 die Bremsdruckstange 6 hindurchtritt. Die Zugöse 24 ist etwa in der Mitte zwischen dem Bremskraftverstärker 6 und dem Bremspedal 2 über die Bremdruckstange 8 geschoben, die an dieser Stelle eine Einschnürung 28 aufweist. Die Einschnürung 28 erleichtert das gesteuerte Ausknicken der Bremsdruckstange 8, wenn bei einer Aktivierung des Straffers 18 das Zugseil 20 aufgerollt und die Zugöse 24 nach oben gerissen wird (Fig. 1b), und dient weiter dazu, die Zugöse 24 axial unverschiebbar im Bereich der Einschnürung 28 festzuhalten. Die axiale Bewegung der Bremsdruckstange 8 bei einer Betätigung des Bremspedals 2 wird durch das zwischen der Zugöse 24 und dem Straffer 18 angeordnete Teilstück des Zugseils 20 kompensiert, dessen Austrittswinkel an der Unterseite des Straffers 18 geringfügig variiert. Wegen des erforderlichen Abstands zwischen dem Straffer 18 und der Bremsdruckstange 8 im Normalzustand (Fig. 1a) wird das Zugseil 20 jedoch selbst dann nicht wesentlich aus einer zur Bremsdruckstange 8 senkrechten Ebene ausgelenkt, wenn das Bremspedal 2 im Augenblick der Aktivierung des Straffers 18 durchgetreten ist.

Das vom Gasgenerator des Straffers 18 auf dessen Welle ausgeübte Drehmoment und damit die Zugkraft im. Zugseil 20 wird durch eine entsprechenden Dimensionierung des Gasgenerators so eingestellt, daß sie ausreicht, um die Bremsdruckstange 8 im Bereich der Einschnürung 28 auszuknicken und die Knickstelle so weit nach oben zu ziehen, bis das Bremspedal 2 infolge des Ausknickens mit seinem unteren Ende gegen die Spritzwand 16 anschlägt. Das Ausknicken der Bremsdruckstange 8 erfolgt mit einer solchen Beschleunigung, daß ein das Bremspedal 2 durchtretender Fuß eines Fahrzeuginsassen nicht zu stark beschleunigt wird, wenn sich das Pedal 2 beim Ausknicken in Richtung der Spritzwand 16 bewegt. Gegebenenfalls kann durch entsprechende Dimensionierung und/oder Materialeigenschaften der Bremsdruckstange 8 bewirkt werden, daß diese gegen Ende der Ausknickbewegung bricht, woraufhin das Bremspedal 2 frei verschwenkbar ist.

Um eine Behinderung des Ausknickens der Bremsdruckstange 8 durch die Spritzwand 16 zu vermeiden, ist eine in der Spritzwand 16 angeordnete Durchtrittsöffnung 30 für die Bremsdruckstange 8 als vertikales Langloch ausgebildet, dessen oberes Ende bei vollständig ausgeknickter Bremdruckstange 8 über dieser angeordnet ist. Gegebenenfalls kann das Langloch im Normalzustand (Fig. 1a) oberhalb der Bremdruckstange 8 mit einer nachgiebigen Dichtung (nicht dargestellt) verschlossen sein.

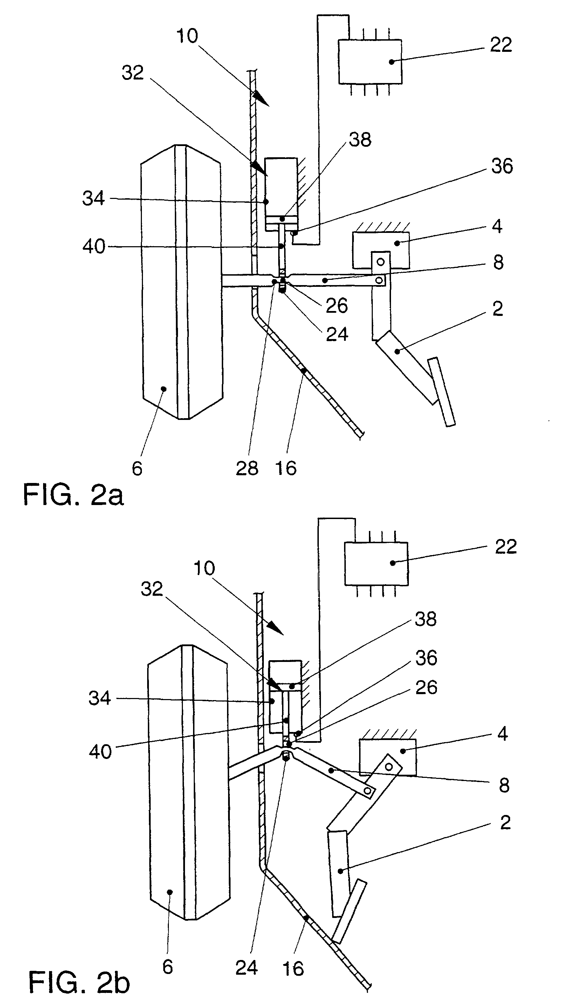

Im Unterschied zur oben beschriebenen Bremspedalanordnung weist die in den Figuren 2a und 2b dargestellte Bremspedalanordnung einen von einer Zylinder-/Kolbenanordnung 32 gebildeten Stellantrieb auf, dessen Zylinder 34 aus einem pyrotechnischen Zündsatz 36 mit Gas beaufschlagt wird, wenn der Zündsatz 36 von der zentralen Airbag-Auslöseeinheit 22 aktiviert wird. Das Gas treibt einen im Zylinder 36 verschiebbaren Kolben 38 mit einer nach unten aus dem Zylinder 36 überstehenden Kolbenstange 40 nach oben, so daß die am freien Ende der Kolbenstange 40 angeordnete Zugöse 24 nach oben bewegt wird und die durch ihr Auge 26 hindurchtretende Bremsdruckstange 8 ausknickt, bis sich das untere Ende des Bremspedals 2 in unmittelbarer Nähe der Spritzwand 16 befindet. Das Auge 26 der Zugöse 24 weist hier einen solchen Durchmesser auf, daß die zylindrische Bremsdruckstange 8 bei ihrer Betätigung berührungslos durch die von der Kolbenstange 40 in ihrer Lage festgehaltene Zugöse 24 hindurchtreten kann. Die Länge der Einschnürung 28 ist hier so gewählt, daß die Zugöse 24 unabhängig vom Schwenkwinkel des Bremspedals 2 immer im Bereich der Einschnürung 28 liegt.

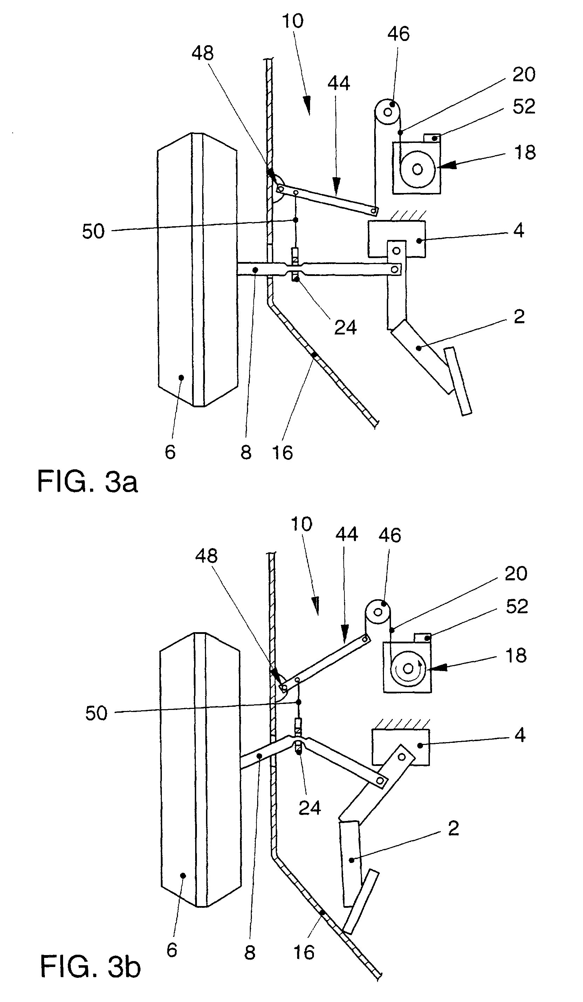

Bei der Bremspedalanordnung in den Figuren 3a und 3b mit einem von einem Straffer 18 gebildeten Stellantrieb ist zwischen dem Straffer 18 und der Zugöse 24 ein Hebel 44 angeordnet, um die Zugkraft des Straffers 18 zu verstärken. Der Hebel 44 ist als einarmiger Hebel ausgebildet und oberhalb der Bremsdruckstange 8 um eine quer zur Fahrtrichtung verlaufende horizontale Achse drehbar an der Spritzwand 16 angelenkt, wobei an seinem freien Ende das über eine Umlenkrolle 46 zum Straffer 18 führende Zugseil 20 und zwischen dem Drehgelenk 48 und dem freien Ende ein zur Zugöse 24 führendes kurzes Seilstück 50 am Hebel 44 befestigt ist. Außerdem ist der Straffer 18 bei dieser Bremspedalanordnung als Kompaktstraffer mit einem integrierten mechanischen Beschleunigungssensor ausgebildet. Alternativ kann zum Beispiel der Hebel selbst ein Auge für die Bremsdruckstange aufweisen und mittels eines Schweißpunkts oder dergleichen klapperfrei in einer Lage festgehalten werden, in der die Bremsdruckstange berührungsfrei durch das Auge hindurchtritt. Bei der Aktivierung des Stellantriebs wird durch die vom Stellglied aufgebrachte Kraft zuerst der Schweißpunkt abgerissen und dann der Hebel bis zum Ausknicken der Bremsdruckstange verschwenkt.

## Patentansprüche

1. Pedalanordnung für ein Kraftfahrzeug, mit
einem Pedal (2),
einer mit dem Pedal (2) verbundenen Pedaldruckstange (8) zur Übertragung von auf das Pedal (2) ausgeübten Schubbewegungen bzw. Schubkräften, sowie einer Ausknickvorrichtung (10), die bei einem Unfall durch eine auf die Pedaldruckstange (8) einwirkende Kraft ein seitliches Ausknicken der Pedaldruckstange (8) und dadurch eine Verlagerung des Pedals (2) in Richtung einer Spritzwand (16) des Kraftfahrzeugs bewirkt, und die einen sensorisch aktivierbaren Stellantrieb (18, 32) umfaßt, der bei einer unfallbedingten Aktivierung durch gesteuertes Ausknicken der Pedaldruckstange (8) eine Pedalverlagerung zumindest bis in unmittelbare Nähe der Spritzwand (16) bewirkt,
**dadurch gekennzeichnet, daß**
die Ausknickvorrichtung (10) eine Zugöse (24) aufweist, die bei einer unfallbedingten Aktivierung der Ausknickvorrichtung (10) im wesentlichen senkrecht zu der Längsachse der Pedaldruckstange (8) nach oben gezogen wird, die Pedaldruckstange (8) eine Einschnürung (28) aufweist, und
die Zugöse (24) der Ausknickvorrichtung (10) an der Einschnürung (28) der Pedaldruckstange (8) angreift und an dieser festgehalten ist.

2. Pedalanordnung nach Anspruch 1, **dadurch gekennzeichnet, daß** der Stellantrieb (18, 32) eine Pedalverlagerung bis zum Anschlagen gegen die Spritzwand (16) bewirkt.

3. Pedalanordnung nach Anspruch 1 oder 2, **dadurch gekennzeichnet, daß** der Stellantrieb (18, 32) die Pedaldruckstange (8) nach oben ausknickt.

4. Pedalanordnung nach einem der Ansprüche 1 bis 3, **dadurch gekennzeichnet, daß** der Stellantrieb (18, 32) innenraumseitig von der Spritzwand (16) seitlich oder oberhalb der Pedaldruckstange (8) und/oder des Pedals (2) angeordnet ist.

5. Pedalanordnung nach einem der Ansprüche 1 bis 3, **dadurch gekennzeichnet, daß** der Stellantrieb (18, 32) motorraumseitig von der Spritzwand (16) angeordnet ist.

6. Pedalanordnung nach Anspruch 4 oder 5, **dadurch gekennzeichnet, daß** ein Stellglied (20, 40, 50) des Stellantriebs (18, 32) in einer Schwenkebene des Bremspedals (2) an der Pedaldruckstange (8) angreift.

7. Pedalanordnung nach einem der Ansprüche 1 bis 6, **gekennzeichnet durch** eine zwischen dem Stellantrieb (18) und der Pedaldruckstange (8) angeordnete Einrichtung (44, 50) zum Verstärken der das Ausknicken bewirkenden Kraft.

8. Pedalanordnung nach Anspruch 7, **dadurch gekennzeichnet, daß** die Einrichtung (44, 50) mindestens einen Hebel (44) oder ein Getriebe umfaßt.

9. Pedalanordnung nach einem der Ansprüche 1 bis 8, **dadurch gekennzeichnet, daß** der Stellantrieb (18, 32) ein pyrotechnischer oder federbeaufschlagter Stellantrieb ist.

10. Pedalanordnung nach einem der Ansprüche 1 bis 9, **dadurch gekennzeichnet, daß** der Stellantrieb aus einem Straffer (18) besteht.

11. Pedalanordnung nach einem der Ansprüche 1 bis 9, **dadurch gekennzeichnet, daß** der Stellantrieb aus einer Zylinder-/Kolbenanordnung (32) besteht.

12. Pedalanordnung nach einem der Ansprüche 1 bis 11, **dadurch gekennzeichnet, daß** der Stellantrieb (18, 32) einen integrierten Sensor aufweist.

13. Pedalanordnung nach einem der Ansprüche 1 bis 11, **dadurch gekennzeichnet, daß** der Stellantrieb (18) durch einen Sensor eines Insassen-Rückhaltesystems des Kraftfahrzeugs aktiviert wird.

14. Pedalanordnung nach Anspruch 13, **dadurch gekennzeichnet, daß** der Stellantrieb (18) durch eine zentrale Airbag-Auslöseeinheit (22) aktiviert wird.

15. Pedalanordnung nach einem der Ansprüche 1 bis 14, **dadurch gekennzeichnet, daß** eine Durchtrittsöffnung (30) für die Pedaldruckstange (8) in der Spritzwand (16) in Richtung der Ausknickbewegung verlängert ist.

## Claims

1. Pedal arrangement for a motor vehicle, having a pedal (2), a pedal push-bar (8) which is connected to the pedal (2) and is intended for transferring pushing movements or pushing forces exerted on the pedal (2), and a buckling device (10) which, in an accident, brings about, due to a force acting on the pedal push-bar (8), a lateral buckling of the pedal push-bar (8) and thereby brings about a displacement of the pedal (2) in the direction of a splashboard (16) of the motor vehicle, and which comprises an actuating drive (18, 32) which can be activated by sensors and, when activated due to an accident, brings about, by controlled buckling of the pedal push-bar (8), a shifting of the pedal at least into the immediate vicinity of the splashboard (16), **characterized in that** the buckling device (10) has a pulling eyelet (24) which, when the buckling device (10) is activated due to an accident, is pulled upwards essentially perpendicular to the longitudinal axis of the pedal push-bar (8), the pedal push-bar (8) has a constriction (28), and the pulling eyelet (24) of the buckling device (10) engages on the constriction (28) of the pedal push-bar (8) and is secured thereon.

2. Pedal arrangement according to Claim 1, **characterized in that** the actuating drive (18, 32) brings about a shifting of the pedal until it strikes against the splashboard (16).

3. Pedal arrangement according to Claim 1 or 2, **characterized in that** the actuating drive (18, 32) buckles the pedal push-bar (8) upwards.

4. Pedal arrangement according to one of Claims 1 to 3, **characterized in that** the actuating drive (18, 32) is arranged on the interior side of the splashboard (16) laterally or above the pedal push-bar (8) and/or the pedal (2).

5. Pedal arrangement according to one of Claims 1 to 3, **characterized in that** the actuating drive (18, 32) is arranged on the engine compartment side of the splashboard (16).

6. Pedal arrangement according to Claim 4 or 5, **characterized in that** an actuating element (20, 40, 50) of the actuating drive (18, 32) engages on the pedal push-bar (8) in a pivoting plane of the brake pedal (2) .

7. Pedal arrangement according to one of Claims 1 to 6, **characterized by** a device (44, 50) which is arranged between the actuating drive (18) and the pedal push-bar (8) for reinforcing the force which brings about the buckling.

8. Pedal arrangement according to Claim 7, **characterized in that** the device (44, 50) comprises at least one lever (44) or a mechanism.

9. Pedal arrangement according to one of Claims 1 to 8, **characterized in that** the actuating drive (18, 32) is a pyrotechnic or spring-charged actuating drive.

10. Pedal arrangement according to one of Claims 1 to 9, **characterized in that** the actuating drive comprises a tightening device (18).

11. Pedal arrangement according to one of Claims 1 to 9, **characterized in that** the actuating drive comprises a cylinder/piston arrangement (32).

12. Pedal arrangement according to one of Claims 1 to 11, **characterized in that** the actuating drive (18, 32) has an integrated sensor.

13. Pedal arrangement according to one of Claims 1 to 11, **characterized in that** the actuating drive (18) is activated by a sensor of an occupant restraint system of the motor vehicle.

14. Pedal arrangement according to Claim 13, **characterized in that** the actuating drive (18) is activated by a central airbag-triggering unit (22).

15. Pedal arrangement according to one of Claims 1 to 14, **characterized in that** a passage opening (30) for the pedal push-bar (8) in the splashboard (16) is extended in the direction of the buckling movement.

## Revendications

1. Agencement de pédale pour un véhicule automobile, avec
une pédale (2)
une tige de pression de pédale (8) reliée à la pédale (2) pour la transmission de mouvements de poussée ou de forces de poussée exercées sur la pédale (2) et un dispositif de fléchissement (10), qui entraîne lors d'un accident sous l'effet d'une force agissant sur la tige de pression (8) un fléchissement latéral de la tige de pression de pédale (8) et de ce fait de déplacement de la pédale (2) en direction d'un tablier (16) du véhicule automobile, et qui comprend une commande de positionnement (18, 32) pouvant être activée par capteur, qui entraîne un déplacement de pédale au moins jusqu'à proximité immédiate du tablier (16) dans le cas d'une activation consécutive à l'accident par le fléchissement contrôlé de la tige de pression de pédale (8),
**caractérisé en ce que**
le dispositif de fléchissement (10) présente un anneau de traction (24), qui est tiré à peu près perpendiculairement à l'axe longitudinal de la tige de pression de pédale (8) vers le haut lors d'une activation consécutive à l'accident du dispositif de fléchissement (10),
la tige de pression de pédale (8) présente un rétrécissement (28) et
l'anneau de traction (24) du dispositif de fléchissement (10) s'applique sur le rétrécissement (28) de la tige de pression de pédale (8) et est maintenu sur celui-ci.

2. Agencement de pédale selon la revendication 1, **caractérisé en ce que** la commande de positionnement (18, 32) entraîne un déplacement de pédale jusqu'à la butée contre le tablier (16).

3. Agencement de pédale selon la revendication 1 ou 2, **caractérisé en ce que** la commande de positionnement (18, 32) fait plier la tige de pression de pédale (8) vers le haut.

4. Agencement de pédale selon l'une quelconque des revendications 1 à 3, **caractérisé en ce que** la commande de positionnement (18, 32) est disposée côté habitacle par rapport au tablier (16) sur le côté ou au-dessus de la tige de pression de pédale (8) et/ou de la pédale (2) .

5. Agencement de pédale selon l'une quelconque des revendications 1 à 3, **caractérisé en ce que** la commande de positionnement (18, 32) est disposée côté compartiment-moteur par rapport au tablier (16).

6. Agencement de pédale selon la revendication 4 ou 5, **caractérisé en ce qu'**un actionneur (20, 40, 50) de la commande de positionnement (18, 32) s'applique sur la tige de pression de pédale (8) dans un plan de basculement de la pédale de frein (2).

7. Agencement de pédale selon l'une quelconque des revendications 1 à 6, **caractérisé par** un appareil (44, 50) disposé entre la commande de positionnement (18) et la tige de pression de pédale (8) pour l' amplification de la force entraînant le fléchissement.

8. Agencement de pédale selon la revendication 7, **caractérisé en ce que** l'appareil (44, 50) comprend au moins un levier (44) ou une transmission.

9. Agencement de pédale selon l'une quelconque des revendications 1 à 8, **caractérisé en ce que** la commande de positionnement (18, 32) est une commande de positionnement pyrotechnique ou sollicitée par ressort.

10. Agencement de pédale selon l'une quelconque des revendications 1 à 9, **caractérisé en ce que** la commande de positionnement comprend un tendeur (18).

11. Agencement de pédale selon l'une quelconque des revendications 1 à 9, **caractérisé en ce que** la commande de positionnement comprend un dispositif cylindre-piston (32).

12. Agencement de pédale selon l'une quelconque des revendications 1 à 11, **caractérisé en ce que** la commande de positionnement (18, 32) présente un capteur intégré.

13. Agencement de pédale selon l'une quelconque des revendications 1 à 11, **caractérisé en ce que** la commande de positionnement (18) est activée par un capteur d'un système de retenue de passager du véhicule automobile.

14. Agencement de pédale selon la revendication 13, **caractérisé en ce que** la commande de positionnement (18) est activée par une unité centrale de déclenchement d'airbag (22).

15. Agencement de pédale selon l'une quelconque des revendications 1 à 14, **caractérisé en ce qu'**une ouverture de passage (3) pour la tige de pression de pédale (8) dans le tablier (16) est prolongée en direction du mouvement de fléchissement.
